Europäisches Patentamt

European Patent Office

Office européen des brevets

(19)

(11) Publication number: **0 039 138**

**A2**

(12) **EUROPEAN PATENT APPLICATION**

(21) Application number: **81301315.8**

(22) Date of filing: **26.03.81**

(51) Int. Cl.³: **B 64 C 27/39**

(30) Priority: **14.04.80 GB 8012223**

(43) Date of publication of application:
**04.11.81 Bulletin 81/44**

(84) Designated Contracting States:
**DE FR GB IT**

(71) Applicant: **WESTLAND AIRCRAFT LIMITED**

**Yeovil Somerset(GB)**

(72) Inventor: **Simons, Ian Ainslie**
**22 High Street**
**Ilminster Somerset(GB)**

(72) Inventor: **Alldridge, Philip John**
**50 St. Mary's Crescent**
**Yeovil Somerset(GB)**

(74) Representative: **Jack, Bruce James et al,**
**FORRESTER & BOEHMERT Widenmayerstrasse 4 1**
**D-8000 Munchen 22(DE)**

(54) Improvements in or relating to aerodynamic rotors.

(57) An aerodynamic rotor includes two diametrically opposed rotor blades (21a, 21b) for rotation about an axis (23), the blades being attached to a rotor hub (22) through flap hinge means (30a, 30b) offset radially from the axis of rotation in a direction opposite a direction in which the respective rotor blades extend.

Such a rotor is termed a negative flapping hinge offset or negative stiffness rotor and is particularly suited for application as a sustaining rotor of a rotary wing aircraft such as a helicopter or autogyro. In such an application the rotor of this invention eliminates or substantially reduces adverse pitching and rolling moments.

FIG.3

EP 0 039 138 A2

Description of Invention

Title: "Improvements in or relating to Aerodynamic rotors"

THIS INVENTION relates to aerodynamic rotors, and particularly to aerodynamic sustaining rotors for rotary wing aircraft such as helicopters or autogyros.

Conventionally, such rotors are subject to instability during operation as a result of gust disturbances which can cause an upward flapping of the rotor blades and a resultant moment about the centre of gravity of the helicopter with a corresponding tilting of the helicopter upwardly about its centre of gravity into the disturbance. It will be apparent that a similar effect occurs, especially in forward flight, due to an increase in forward speed.

Accordingly, in one aspect, the invention provides an aerodynamic rotor including a pair of diametrically opposed rotor blades arranged for rotation about an axis and attached to a rotor hub by hinge means offset radially from the axis of rotation and arranged to permit movement of the respective rotor blade in a blade flap plane, wherein each rotor blade extends in a direction generally opposite that of the direction of offset of its respective hinge from the axis of rotation.

The rotor blades may be attached to inter-engaging U-shaped brackets and the hinge means may comprise pivotal mountings attaching legs of each bracket to upstanding flanges on the rotor hub. Preferably, a twenty five per cent chord line of each rotor blade passes through the axis of rotation.

The hinge means may comprise pitch/flap coupling hinge means, and stops may be provided and arranged to limit upward flap movement of the rotor blades.

Preferably, the hinge means may be offset from the axis of rotation by between two and three per cent of a rotor radius.

In one embodiment, the rotor hub may be rotatably mounted at an upper end of a generally vertically extending shaft supported in a spherical bearing on a fuselage of a rotary wing aircraft to permit tilting of the rotor hub.

An alternative embodiment may include a feathering hinge in each blade attachment and control means operative to control the pitch angle of the respective rotor blades both collectively and cyclically.

In yet another aspect, the invention provides a rotary wing aircraft having a co-axial sustaining rotor system comprising two co-axially spaced-apart pairs of diametrically opposed rotor blades arranged for rotation about a generally vertical axis, characterised in that the upper pair of rotor blades are attached to a rotor hub through hinge means arranged to permit movement of the respective rotor blades in a blade flap plane, said hinge means being offset radially from the axis of rotation and said respective rotor blades extending from said hinges in a direction generally opposite that of said hinge offset.

In another aspect, the invention provides, in or for a rotary wing aircraft, a sustaining rotor comprising a pair of diametrically opposed rotor blades arranged for rotation about a generally vertical axis and attached to a rotor hub by hinge means offset radially from the axis of rotation, and adapted to permit movement of the respective rotor blade in a blade flap plane, wherein each rotor blade extends in a direction generally opposite the direction of offset of its respective hinge means from the axis of rotation.

The invention will now be described by way of example only and with reference to the accompanying drawings, in which:

Figures 1 and 2 are diagrammatic elevations of two existing types of helicopter rotor,

Figure 3 is a diagrammatic elevation of a helicopter rotor constructed in accordance with this invention,

Figure 4 is a side elevation of a helicopter rotor constructed in accordance with one embodiment of this invention, and

Figure 5 is a plan view of the rotor of Figure 4.

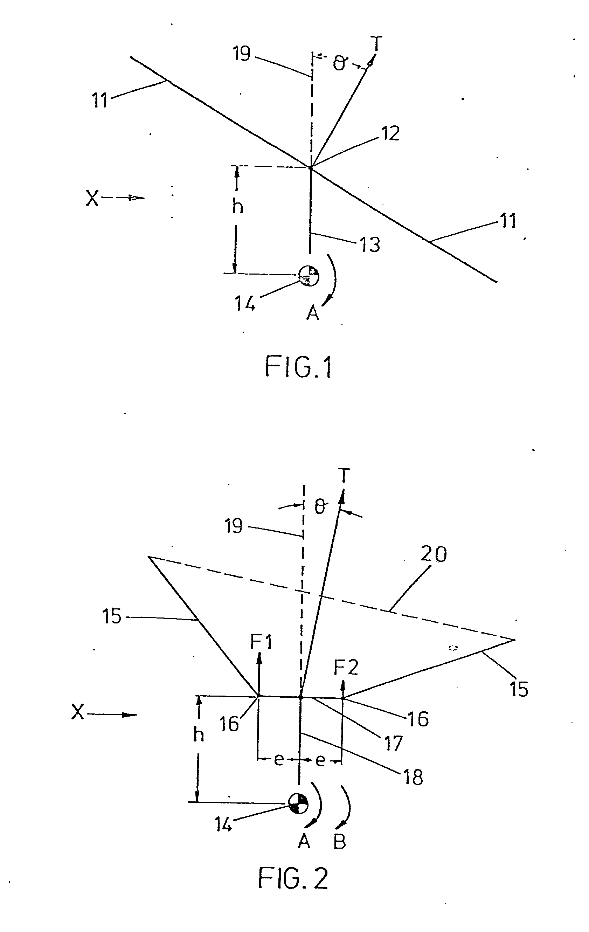

Referring now to Figure 1, a helicopter rotor comprises two diametrically opposed rotor blades 11 supported at the upper end of a rotor drive shaft 13 arranged for rotation about axis 19. The blades 11 are mounted on a common pivot 12, so as to be capable of complementary pivotal movements in a blade flap plane, i.e. in a plane perpendicular to a normal plane of rotation. Such rotors have become known in the art as teetering rotors.

For the purpose of description, the direction of a gust disturbance is assumed to be in the direction of arrow X, and a centre of gravity 14 of the helicopter is located vertically below the mounting 12 and spaced at a distance h therefrom. The rotor produces a thrust T.

In such a rotor having fixed cyclic pitch control of the rotor blades 11, any increase in the forward speed of the helicopter or the effects of a wind gust disturbance from the direction of flight leads to a backward flapping of the rotor disc as shown in Figure 1, which results in an undesirable nose-up movement of the helicopter. This is due to the resulting backward tilting of thrust vector T through angle $\theta$ which results in a moment of magnitude $T\sin\theta$ times h operative in a clockwise direction about the centre of gravity 14, as indicated by arrow A.

Figure 2 shows a helicopter rotor in which each of two diametrically opposed rotor blades 15 is attached to a mechanical flapping hinge 16 carried by a rotor hub 17 attached to a rotor drive shaft 18. The hinges 16 are offset radially at a distance e from an axis of rotation 19, and it will be noted that the operational position of the rotor blades 15 is generally a continuation of the direction of offset of its respective hinge 16. The offset is normally between two and three per cent of rotor radius. The direction of a gust disturbance is assumed to be in the direction of arrow X.

In this case, the rotor is again affected by moment A due to the greater upward flapping of the front rotor blade 15 causing rearward tilting of a rotor disc 20 and the thrust vector T. In addition, shear forces $F_1$ and $F_2$ operate at the flapping hinges 16 due to dynamic and aerodynamic forces on the rotor blades 15. Due to the increased angle of attack of the front blade, shear force $F_1$ increases and shear force $F_2$ decreases, and this positive offset of shearing forces results in a moment B, sometimes known as the rotor stiffness moment, of magnitude $(F_1 - F_2)$ times e operative in a clockwise direction about the centre of gravity 14 of the helicopter. It will be noted that moments A and B operate in the same direction so that the total de-stabilising moment active on a positive flapping hinge offset rotor is a sum of the moments A and B. It will be apparent that moment B is proportional to the amount of offset e.

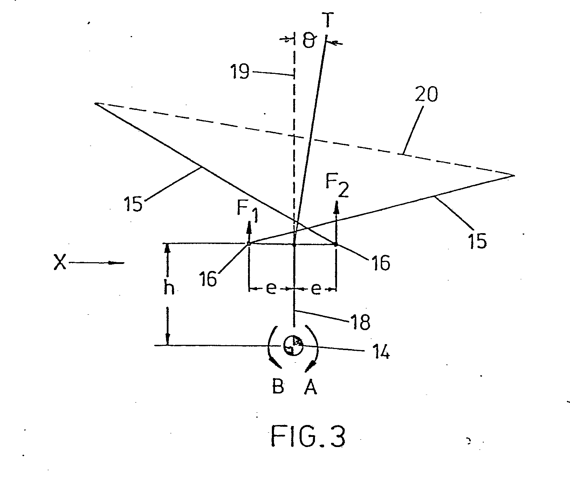

Referring now to Figure 3, it will be noted that in a rotor constructed in accordance with this invention, the operational direction of each rotor blade 15 is generally opposite the direction of offset of its effective hinge point defined by flap hinges 16 from the axis of rotation 19.

In operation, the helicopter rotor of Figure 3 is again subject to moment A due to the tilt of thrust vector T and operative in a clockwise direction. However, since blade 15 at the front of the rotor disc 20 is attached to the flap hinge 16 at the rear of the rotor hub, shear force $F_2$ is now greater than shear force $F_1$ providing a rotor stiffness moment B equal to $(F_2 - F_1)$ times e operative in a counterclockwise direction about centre of gravity 14. By selecting a value of e such that $(F_2 - F_1)$ times e = $T \sin \theta$ times h it is therefore possible to ensure that a zero net moment is applied at the centre of gravity 14 thereby eliminating the de-stabilising effect.

Thus, a helicopter rotor constructed in accordance with this invention produces, in response to gust disturbance, a rotor head moment operative in a sense opposite that produced by tilting of thrust vector T. The rotor is inert in a moment sense in that it produces no adverse pitching or rolling moments, and this is achieved by incorporating negative rotor stiffness as hereinafter defined.

In respect of the above described rotors, the teetering rotor of Figure 1 can be referred to as a zero flapping hinge offset rotor in that the diametrically opposed rotor blades 11 flap about a hinge 12 located on the axis of rotation 19. The rotor of Figure 2 is a positive flapping hinge offset rotor in which the respective flapping hinges 16 are offset from the axis of rotation 19 and in the same direction as the respective rotor blades 15, so as to exhibit a positive rotor stiffness characteristic, i.e., the moment produced by tilting of the rotor disc 20 is active on the helicopter in the same direction as the direction of flapping.

The negative stiffness characteristic of the rotor of Figure 3 results from the offset of the effective flapping hinge points defined by the hinges 16 from the axis of rotation 19 and in a direction opposite that of the respective rotor blades 15. It is convenient therefore to refer to a helicopter rotor constructed according to this invention as a negative flapping hinge offset rotor or a rotor having a negative rotor stiffness characteristic.

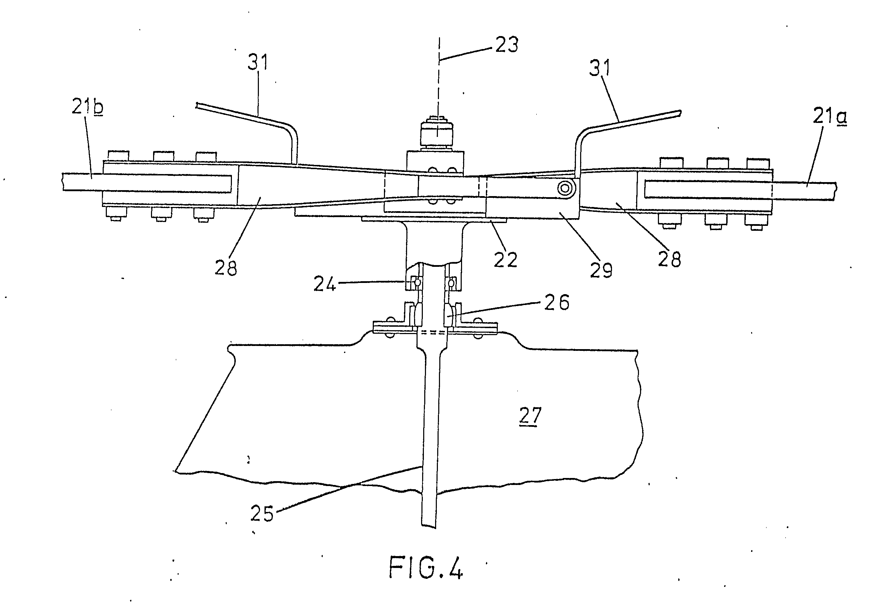

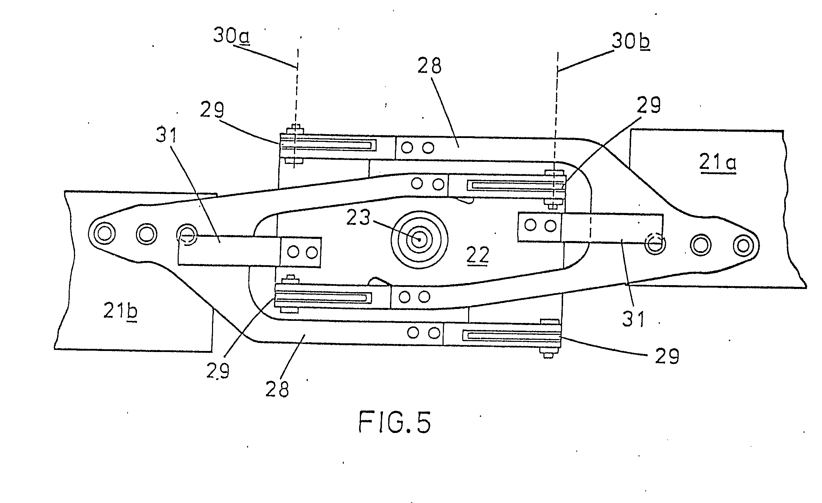

Figures 4 and 5 illustrate a sustaining rotor constructed in accordance with one embodiment of the invention for use on an autogyro.

Two diametrically opposed rotor blades 21a and 21b are attached to a rotor hub 22 for rotation about a generally vertical axis 23. The rotor hub 22 is mounted on ball bearings 24 for rotation about an upper end of a generally vertically extending shaft 25 supported on a spherical bearing 26 and extending downwardly into a fuselage 27. The rotor blades 21a and 21b are attached to inter-engaging U-shaped brackets 28, the legs of each bracket 28 being pivotally mounted to upstanding flanges 29 formed on the rotor hub 22 for pivotal movement about horizontal blade flapping axes 30a and 30b respectively.

It will be noted, especially from a viewing of Figure 5, that rotor blade 21a extends in a radial direction relative the axis of rotation 23 opposite that of the direction of its respective flapping hinge axis 30a, and that rotor blade 21b is similarly disposed relative its flapping hinge axis 30b.

The illustrated arrangement utilising the inter-engaged U-shaped attachment brackets 28 enables the centre of lift of both rotor blades, which is located approximately on the twenty five per cent chord line, to extend through the axis of rotation 23.

Stops 31 are carried by the rotor hub 22 and are arranged to limit upward flapping of each of the rotor blades 21a and 21b.

An autogyro fitted with the rotor illustrated in Figures 4 and 5 is controlled by tilting of the shaft 25. The incorporation of a negative flapping hinge offset rotor on an autogyro means that undesirable pitching or rolling moments resulting from flap disturbances are eliminated yet longitudinal and lateral control is maintained by tilting the thrust vector to provide a fore-and-aft or lateral component.

A characteristic of the moment inert rotor is that there is no need for pitch and roll attitude trim so that the requirement for cyclic pitch control for this purpose is unnecessary. This makes the rotor of this invention particularly suited for use as the upper rotor in a helicopter having a co-axial sustaining rotor configuration since the normal intermediate swash plate for cyclic control of the upper rotor can be eliminated. If desired, feathering hinges can be incorporated, and collective control of the moment inert upper rotor can be provided by a central control shaft extended upwardly through a hollow drive shaft, with cyclic control of the lower rotor being retained for control purposes.

In a further unillustrated embodiment, the negative flapping hinge offset rotor is adapted for use as a main sustaining rotor of a single rotor helicopter by the incorporation of feathering hinges and a suitable control system such as a conventional swash plate to control the pitch of the rotor blades both collectively and cyclically.

It will be apparent from a viewing of Figure 3 that the negative flapping hinge offset rotor remains susceptible to a tilting of the thrust vector T and, therefore, an increase in drag. This can be reduced by the incorporation of pitch/flap coupling in known manner. The effect of such a coupling is to reduce automatically the pitch angle of the blade as it flaps upwardly thereby trimming down the blade flapping angle to a reasonable level.

The amount of the offset of a negative flapping hinge offset rotor of this invention will normally be of the order of two to three per cent of rotor radius, however, this may be increased in some instances so that the rotor actually tilts into a disturbance in counteracting the thrust vector moment. In such an embodiment, any tendency for control reversal will need to be considered during the design of the control system.

In the illustrated embodiment, the position of the effective flapping hinge is defined by mechanical hinges 16, however, it will be understood that other suitable means could be utilised. For example, the hinges 16 may comprise elastomeric bearings which are being increasingly used in helicopter rotors due to their low maintenance requirements and because they do not require lubrication. Alternatively, the effective flapping hinge points may be defined by the use of resilient flexure members between the rotor blades and the hub, the flexure members being attached to the hub at the offset location previously described. Conveniently, in such an arrangement, the flexure members may be manufactured of fibre-reinforced plastics material and may be formed integral with the rotor hub.

Whilst the present invention has been particularly described and illustrated in respect of rotors for use as a sustaining rotor of a helicopter or autogyro, it is to be understood that it could also find application in other aerodynamic rotors such as, for example, wind driven rotors.

CLAIMS

1. An aerodynamic rotor including a pair of diametrically opposed rotor blades (15) arranged for rotation about an axis (19) and attached to a rotor hub (17) by hinge means (16) offset radially from the axis of rotation and arranged to permit movement of the respective rotor blades in a blade flap plane, characterised in that each rotor blade extends in a direction generally opposite the direction of offset of its respective hinge means from said axis of rotation.

2. A rotor as claimed in Claim 1, characterised in that the rotor blades are attached to inter-engaging U-shaped brackets (28) said hinge means comprising pivotal mountings attaching legs of each bracket to upstanding flanges (29) provided on said rotor hub.

3. A rotor as claimed in Claim 1 or Claim 2, characterised in that a twenty five per cent chord line of each of said rotor blades passes through said axis of rotation.

4. A rotor as claimed in any preceding Claim, characterised in that said hinge means comprises pitch/flap coupling hinge means.

5. A rotor as claimed in any preceding Claim, characterised in that stop means (31) are arranged to limit upward flap movement of said rotor blades.

6. A rotor as claimed in any preceding Claim, characterised in that said hinge means is offset from said axis of rotation by between two and three per cent of a rotor radius.

7. A rotor as claimed in any preceding Claim, characterised in that said rotor hub is rotatably mounted at an upper end of a generally vertically extending shaft (25) supported in a spherical bearing (26) on a fuselage of a rotary wing aircraft.

8. A rotor as claimed in any one of Claims 1 to 6 inclusive, characterised in that a feathering hinge is incorporated in each blade attachment and control means are provided to control the pitch angle of the respective rotor blades both collectively and cyclically.

9. A rotary wing aircraft having a main sustaining rotor constructed in accordance with any one of Claims 1 to 8 inclusive.

10. In or for a rotary wing aircraft a sustaining rotor comprising a pair of diametrically opposed rotor blades (21a, 21b) arranged for rotation about a generally vertical axis (23) and attached to a rotor hub (22) by hinge means (30a, 30b) offset radially from said axis of rotation and adapted to permit movement of the respective rotor blades in a blade flap plane, characterised in that each rotor blade extends in a direction generally opposite the direction of offset of its respective hinge means from said axis of rotation.

11. A rotary wing aircraft having a co-axial sustaining rotor system comprising two axially spaced-apart pairs of diametrically opposed rotor blades, arranged for rotation about a generally vertical axis, characterised in that the upper pair of rotor blades are attached to a rotor hub through hinge means arranged to permit movement of the respective rotor blades in a blade flap plane, said hinge means being offset radially from the axis of rotation and said respective rotor blade extending from said hinges in a direction generally opposite that of said hinge offset.

FIG.1

FIG. 2

0039138

FIG.3

FIG.4

FIG.5